# EUROPÄISCHE PATENTANMELDUNG

(11) **EP 1 011 290 A2**
(43) Veröffentlichungstag der Anmeldung: **21.06.2000**
(21) Anmeldenummer: 99114828.9
(22) Anmeldetag: 29.07.1999
(51) Int. Cl.: H04Q 11/04

(54) **Netzwerk von mehreren Endgeräten und Verfahren zum Betrieb eines Netzwerks von mehreren Endgeräten**

(30) Priorität: 16.12.1998 DE 19858059
(71) Anmelder: ROBERT BOSCH GMBH, 70442 Stuttgart (DE)
(72) Erfinder: Dappa, Henry, 64319 Pfungstadt (DE)

(57) **Zusammenfassung**

Die Erfindung betrifft ein Netzwerk (1) von mehreren Endgeräten (2), die untereinander über Schnittstellen (3) und mindestens einen Asynchronous-Transfer-Mode (ATM)-Vermittlungsswitch (4) verbunden sind, wobei die Endgeräte (2) ATM-Anschlüsse aufweisen und untereinander über virtuelle ATM-Kanäle (5) Daten austauschen. Um bei einem solchen Netzwerk (1) insbesondere den Aufbau einer Datenübertragungsverbindung zu einem gewünschten Teilnehmer, der über mindestens ein Endgerät (2) in dem Netzwerk (1) erreichbar ist, zu erleichtern und zu beschleunigen, wird vorgeschlagen, daß mehrere Endgeräte (2) zu einer Gruppe zusammengefaßt sind, daß mindestens ein Endgerät (2) der Gruppe als Proxy-Agent (6) definiert ist, daß der Schnittstelle (3) des Proxy-Agenten (6) eine ATM-Adresse zugewiesen ist, daß der Proxy-Agent (6) erste Mittel zur Auswahl der Schnittstelle (3) eines der Endgeräte (2) der Gruppe aufweist, zu oder von dem eine Datenübertragungsverbindung aufgebaut werden soll, und daß der Proxy-Agent (6) zweite Mittel zur Auswahl des ATM-Kanals (5) aufweist, über den die Daten übertragen werden sollen.

## Beschreibung

Die vorliegende Erfindung betrifft ein Netzwerk von mehreren Endgeräten, insbesondere von Computern, die untereinander über eine Schnittstelle für jedes Endgerät und mindestens einen Asynchronous-Transfer-Mode (ATM)-Vermittlungsswitch verbunden sind, wobei auf mindestens einem der Endgeräte Informationen zum Konfigurieren, Überwachen und Betrieb der Schnittstellen abgelegt sind und wobei die Endgeräte ATM-Anschlüsse aufweisen und untereinander über virtuelle ATM-Kanäle Daten austauschen.

Die Erfindung betrifft außerdem ein Verfahren zum Betrieb eines Netzwerks von mehreren Endgeräten, insbesondere von Computern, die untereinander über eine Schnittstelle für jedes Endgerät und mindestens einen Asynchronous-Transfer-Mode (ATM)-Vermittlungsswitch verbunden sind, wobei auf mindestens einem der Endgeräte Informationen zum Konfigurieren, Überwachen und Betrieb der Schnittstellen abgelegt sind und wobei die Endgeräte ATM-Anschlüsse aufweisen und untereinander über virtuelle ATM-Kanäle Daten austauschen.

### Stand der Technik

Aus dem Stand der Technik sind derartige Netzwerke zum Austausch von Daten zwischen mehreren Endgeräten, insbesondere zwischen Computern, bekannt. Bei diesen bekannten Netzwerken werden die Daten nach dem Asynchronous-Transfer-Mode (ATM)-Verfahren übertragen. Dieses Übertragungsverfahren erlaubt eine hohe Übertragungsrate von derzeit bis zu 625 Mbit/s pro Anschluß und kann für jeden Datenübertragungsvorgang eine bestimmte Dienstgüte garantieren. Zur Bestimmung der Dienstgüte wird jedem Datenübertragungsvorgang eine bestimmte Dienstklasse zugeordnet, die darüber entscheidet, ob die Daten eines Datenübertragungsvorgangs bevorzugt oder erst dann übertragen werden, wenn auf dem ATM-Anschluß Übertragungskapazitäten frei sind.

Im Gegensatz dazu kann bei herkömmlichen Local-Area-Networks (LANs) für eine Datenübertragung keine bestimmte Dienstgüte garantiert werden, da das LAN ein sog. shared medium ist, das dezentral von den einzelnen gleichberechtigten Endgeräten gesteuert wird. Bei einer großen Anzahl von zu übertragenden Daten, einem sog. Datenburst, kann es bei dem LAN zu erheblichen Zeitverzögerungen der übertragenen Daten für andere Benutzer des Netzwerks kommen.

Die Endgeräte, die in dem ATM-Netzwerk miteinander vernetzt sind, weisen ATM-Anschlüsse auf, mit denen sie über ATM-Kanäle mit den ATM-Vermittlungsswitches verbunden sind. Pro ATM-Netzwerk steht üblicherweise ein ATM-Vermittlungsswitch zur Verfügung. Zwischen dem ATM-Vermittlungsswitch und den Endgeräten ist jeweils eine Schnittstelle angeordnet, über die die ATM-Kanäle laufen. Die Schnittstellen sind üblicherweise als sog. User-Network-Interface (UNI)-Schnittstellen ausgebildet.

Die Informationen zum Konfigurieren, Überwachen und Betrieb der UNI-Schnittstellen sind bspw. in einer Datenbank auf dem mindestens einen Endgerät abgelegt. Eine solche Datenbank stellt die komfortabelste Alternative dar, grundsätzlich können die Informationen jedoch auch in einer Datei abgelegt sein. Die Datenbank ist üblicherweise als eine sog. Management-Information-Base (MIB)-Datenbank ausgebildet. Die in dem mindestens einen Endegerät abgelegten Informationen werden als sog. Integrated-Local-Management-Interface (ILMI)-Informationen bezeichnet. Die ILMI-Informationen umfassen bspw. Informationen zur Identifikation der virtuellen ATM-Kanäle oder Parameter der Schnittstellen (Adresse, Übertragungsrate, etc.). Zur Identifikation der virtuellen ATM-Kanäle wird eine sog. Virtual-Path-Identifier (VPI)- und Virtual-Channel-Identifier (VCI)-Nummerierung verwendet. Mit der VPI-/VCI-Nummerierung sind durchgängig alle ATM-Kanäle einer bestimmten Schnittstelle bezeichnet. Die VPI-/VCI-Nummerierung erlaubt somit lediglich eine Identifizierung eines ATM-Kanals einer vorgegebenen Schnittstelle.

Wenn nun ein erster Teilnehmer mittels eines ersten Endgeräts eines Netzwerks der eingangs genannten Art eine Datenübertragungsverbindung zu einem zweiten Endgerät aufbauen möchte, muß das erste Endgerät nach dem Stand der Technik die Adresse des zweiten Endgeräts, zu dem es eine Datenübertragungsverbindung aufbauen möchten, kennen. Das gewünschte zweite Endgerät muß über seine Adresse explizit angefordert werden. Kann die Schnittstelle des gewünschten Endgeräts die von dem ersten Endgerät geforderten Übertragungsparameter (Dienstgüte, Übertragungsrate, etc.) aufgrund von anderen Datenübertragungsverbindungen oder grundsätzlich nicht gewährleisten, kann keine Verbindung aufgebaut werden. Das erste Endgerät, das die Datenübertragungsverbindung aufbauen möchte, kann versuchen die Verbindung zu einem späteren Zeitpunkt aufzubauen. Falls der gewünschte Teilnehmer mehrere Endgeräte zur Verfügung stellt, kann das erste Endgerät, das die Datenübertragung aufbauen möchte, auch versuchen, die Verbindung zu einem dieser anderen Endgeräte aufzubauen. Dazu muß das erste Endgerät jedoch wiederum die Adresse dieser anderen gewünschten Endgeräte kennen und die anderen gewünschten Endgeräte über ihre Adresse eines nach dem anderen explizit adressieren. Das ist umständlich und zeitaufwendig.

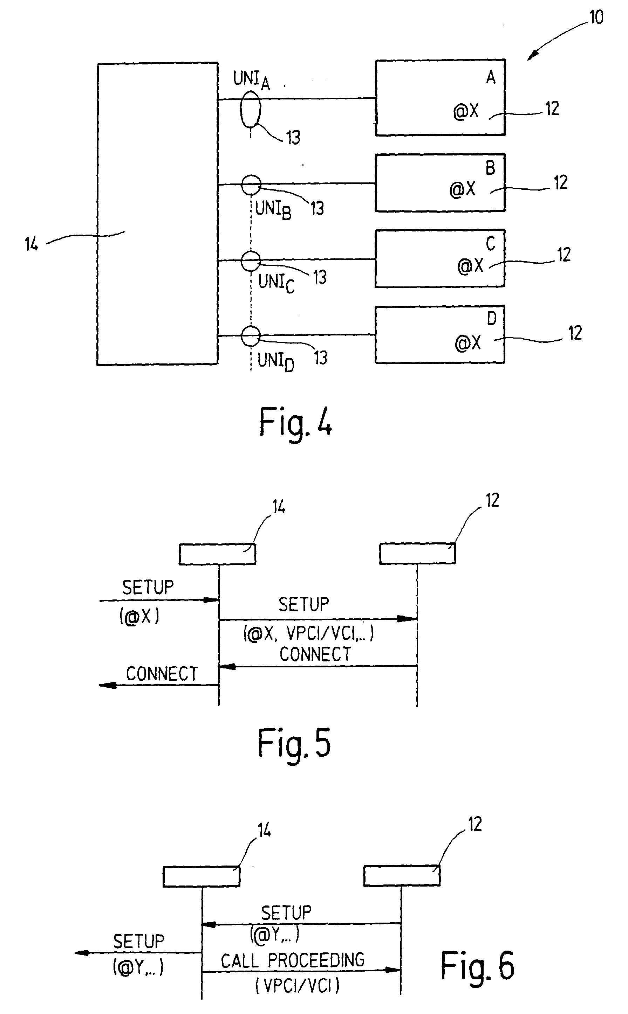

Um hier Abhilfe zu schaffen ist aus dem Stand der Technik eine sogenannte Gruppenadressierung bekannt, die in den Fig. 4 bis 6 dargestellt ist. Es zeigen:
- Fig. 4: ein Netzwerk für Gruppenadressierung in schematischer Darstellung;
- Fig. 5: einen Signalverlauf zwischen einem ATM-Vermittlungsswitch und einem von dem Vermittlungsswitch ausgewählten Endgerät der Gruppe bei dem bekannten Netzwerk aus Fig. 4; und
- Fig. 6: einen anderen Signalverlauf zwischen dem ATM-Vermittlungsswitch und dem ausgewählten Endgerät bei dem bekannten Netzwerk aus Fig. 4.

Bei der Gruppenadressierung werden mehrere Endgeräte (12) des Netzwerks (10) zu einer Gruppe zusammengefaßt. Den Endgeräten (12) der Gruppe wird eine gemeinsame Gruppenadresse (@X) zugewiesen. Wenn nun der erste Teilnehmer mittels des ersten Endgeräts des Netzwerks (10) eine Datenübertragungsverbindung zu einem zweiten Endgerät (12) aufbauen möchte, das zusammen mit anderen Endgeräten (12) zu der Gruppe zusammengefaßt ist, muß das erste Endgerät lediglich die Gruppenadresse (@X) kennen und diese Gruppenadresse anwählen. Der ATM-Vermittlungsswitch (14) erkennt, daß es sich bei der von dem ersten Endgerät angewählten Adresse (@X) um eine Gruppenadresse handelt und prüft, ob eines der Endgeräte (12) der Gruppe die von dem ersten Endgerät geforderten Übertragungsparameter (Dienstgüte, Übertragungsrate, etc.) erfüllen kann. Falls dem so ist wählt der ATM-Vermittlungsswitch (14) die entsprechende Schnittstelle (13) (UNI_{B}) und einen ATM-Kanal dieser Schnittstelle aus (VPCI/VCI) und baut die gewünschte Datenübertragungsverbindung zwischen dem ersten Endgerät und dem ausgewählten Endgerät (B) der Gruppe auf.

Dieses bekannte Netzwerk, bei dem ein bestimmtes Endgerät der Gruppe durch den ATM-Vermittlungsswitch ausgewählt wird, weist jedoch nur eine begrenzte Flexibilität auf. Zum einen kann der ATM-Vermittlungsswitch in derartigen Netzwerken nur eine beschränkte Anzahl von Gruppen verwalten und zum anderen kann die Verwaltung der einzelnen Gruppen in dem Netzwerk nur in sehr begrenztem Umfang besonderen Anforderungen angepaßt werden. Solche besonderen Anforderungen sind bspw. die Auswahlkriterien, nach denen der ATM-Kanal, über den die Daten ausgetauscht werden sollen, ausgewählt wird. Schließlich bleibt anzumerken, daß die Gruppenadressierung in ATM-Netzen z. Zt. noch sehr wenig verbreitet ist.

Aus den vorgenannten Nachteilen des Standes der Technik ergibt sich die Aufgabe der vorliegenden Erfindung, ein Netzwerk der eingangs genannten Art dahingehend auszugestalten und weiterzubilden, daß die Flexibilität des Netzwerks erhöht wird, ohne daß der Vermittlungsswitch die Voraussetzungen für eine Gruppenadressierung erfüllen muß.

Zur Lösung dieser Aufgabe schlägt die Erfindung ausgehend von dem Netzwerk der eingangs genannten Art vor, daß mehrere Endgeräte zu einer Gruppe zusammengefaßt sind, daß mindestens ein Endgerät der Gruppe als Proxy-Agent definiert ist, daß der Schnittstelle des Proxy-Agenten eine ATM-Adresse zugewiesen ist, daß der Proxy-Agent erste Mittel zur Auswahl der Schnittstelle eines der Endgeräte aus der Gruppe aufweist, zu oder von dem eine Datenübertragungsverbindung aufgebaut werden soll, und daß der Proxy-Agent zweite Mittel zur Auswahl des ATM-Kanals aufweist, über den die Daten übertragen werden sollen.

Erfindungsgemäß ist erkannt worden, daß der Aufbau einer Datenübertragungsverbindung dadurch wesentlich flexibiler gestaltet werden kann, indem der Verbindungsaufbau zu Endgeräten innerhalb einer Gruppe nicht zentral durch den ATM-Vermittlungsswitch erfolgt, sondern wenn in jeder Gruppe von Endgeräten geeignete Mittel zum Verbindungsaufbau vorgesehen sind, die den Verbindungsaufbau für ihre jeweilige Gruppe übernehmen. Die einzelnen Mittel zum Verbindungsaufbau in ihrer Gruppe sind durch den Verbindungsaufbau nicht überfordert. Zudem wird der ATM-Vermittlungsswitch entlastet.

Die Mittel zum Verbindungsaufbau können beispielsweise als ein bestimmtes Endgerät der Gruppe ausgebildet sein. Dieses bestimmte Endgerät wird als Proxy-Agent bezeichnet.

Dem Proxy-Agent ist eine ATM-Adresse zugeteilt. Wenn nun ein erster Teilnehmer mittels eines ersten Endgeräts des erfindungsgemäßen Netzwerks eine Datenübertragungsverbindung zu einem zweiten Teilnehmer, der über mehrere zu einer Gruppe zusammengefaßte zweite Endgeräte in dem Netzwerk erreichbar ist, aufbauen möchte, muß das erste Endgerät lediglich die ATM-Adresse des Proxy-Agenten dieser Gruppe anwählen. Der Proxy-Agent wird dann mit den ersten Mitteln die Schnittstelle eines der zweiten Endgeräte der Gruppe auswählen, die die geforderten Übertragungsparameter (Dienstgüte, Ütertragungsrate, etc.) gewährleisten kann. Außerdem wird der Proxy-Agent mit den zweiten Mitteln einen geeigneten ATM-Kanal dieser Schnittstelle auswählen, über den die Daten übertragen werden sollen. Schließlich wird der Proxy-Agent die gewünschte Datenübertragungsverbindung zwischen dem ersten Endgerät des ersten Teilnehmers und einem der zweiten Endgeräte des zweiten Teilnehmers herstellen.

Die Endgeräte einer Gruppe des erfindungsgemäßen Netzwerks werden nicht über eine gemeinsame Gruppenadresse angesprochen, sondern über die ATM-Adresse des Proxy-Agenten der Gruppe.

Es ist denkbar, daß in dem Fall, wenn keine der Schnittstellen einer Gruppe die geforderten Übertragungsparameter erfüllen kann, weil bspw. die Übertragungsraten der Schnittstellen zu gering sind, mehrere Schnittstellen ausgewählt werden, die in der Summe die geforderte Übertragungsrate erreichen. Eine solche Aufteilung einer Datenübertragungsverbindung auf mehrere Verbindungen muß jedoch für den Teilnehmer unbemerkt erfolgen. Sie ist technisch machbar, jedoch mit einem relativ hohen technischen Aufwand verbunden.

Es ist denkbar, daß der Proxy-Agent die von ihm ausgewählte Schnittstelle und den ausgewählten ATM-Kanal an den ATM-Vermittlungsswitch übermittelt, der dann den weiteren Verbindungsaufbau steuert. Es erscheint jedoch sinnvoll, wenn der Proxy-Agent auch den weiteren Verbindungsaufbau selbst steuert. Deshalb weist der Proxy-Agent gemäß einer bevorzugten Ausführungsform der vorliegenden Erfindung weitere Mittel zum Steuern des Aufbaus der Datenübertragungsverbindung zu oder von den Endgeräten der Gruppe auf.

Gemäß einer vorteilhaften Weiterbildung der Erfindung wird vorgeschlagen, daß dem Proxy-Agenten bekannt ist, welche Endgeräte zu einer Gruppe zusammengefaßt sind. Desweiteren ist dem ATM-Vermittlungsswitch vorteilhafterweise die ATM-Adresse des Proxy-Agenten bekannt. Ein wesentlicher Punkt der vorliegenden Erfindung ist es, daß die Gruppen von Endgeräten für den Vermittlungsswitch transparent sind. Er sieht zwar die einzelnen Endgeräte über die ihnen zugeordnete Schnittstellen (d. h. er ist über die Auslastung der Ressourcen der einzelnen Endgeräte informiert), er weiß aber nicht, daß die Endgeräte in Gruppen zusammengefaßt sind und welche Endgeräte zu einer Gruppe zusammengefaßt sind. Das Gruppenverhalten wird ausschließlich durch den Proxy-Agenten realisiert. Der Proxy-Agent delegiert die Zuteilung von Ressourcen für die Schnittstellen einfach an den Proxy-Agenten.

Gemäß einer bevorzugten Ausführungsform wird vorgeschlagen, daß zwischen dem ATM-Vermittlungsswitch und dem Proxy-Agenten ein Signalisierungskanal und für jedes Endgerät der Gruppe ein Kanal zum Übertragen der Informationen zum Konfigurieren, Überwachen und Betrieb der Schnittstellen der Endgeräte der Gruppe ausgebildet ist. Diese Kanäle zum Übertragen von Informationen zum Konfigurieren, Überwachen und Betrieb der Schnittstellen zwischen dem ATM-Vermittlungsswitch und dem Proxy-Agenten sind für das erfindungsgemäße Netzwerk nicht unbedingt notwendig. Sie bieten sich aber an, da der Proxy-Agent, um über den Zustand der Schnittstellen, insbesondere über deren Verbindungsressourcen, genau im Bilde zu sein, einen Zugriff auf die Schnittstellen über diese Kanäle zum Übertragen der Informationen zum Konfigurieren, Überwachen und Betrieb der Schnittstellen haben muß. Wohlgemerkt, der Zugriff des Proxy-Agenten könnte auch auf in den Endgeräten bereits vorhandenen, in der Regel proprietären Mitteln beruhen, wohingegen der Austausch zwischen dem Vermittlungsswitch und dem Proxy-Agenten in aller Regel auf Standardprotokollen, wie z. B. ILMI 4.0 von ATM Forum, basiert. Der Signalisierungskanal und die Kanäle zum Übertragen der Informationen zum Konfigurieren, Überwachen und Betrieb der Schnittstellen sind vorzugsweise als permanente virtuelle Verbindungen ausgebildet. Diese Verbindungen werden auch als sog. Permanent Virtual Channel Connections (PVCC) bezeichnet.

Bei den ATM-Netzwerken nach dem Stand der Technik sind die virtuellen ATM-Kanäle zwischen einem Endgerät und dem ATM-Vermittlungsswitch für jedes Endgerät gesondert mittels einer Virtual-Path-Identifiers (VPI)-Nummerierung und einer Virtual-Channel-Identifier (VCI)-Nummerierung durchnummeriert. Das stellt wie beim Stand der Technik so lange kein Problem dar, wie jedes Endgerät den eigenen Verbindungsaufbau und Verbindungsabbau zu dem ATM-Vermittlungsswitch steuert und jeder virtuelle ATM-Kanal zwischen diesem Endgerät und dem ATM-Vermittlungsswitch über dessen VPI/VCI-Nummerierung eindeutig identitizierbar ist.

Wenn der Verbindungsaufbau und Verbindungsabbau jedoch wie bei der vorliegenden Erfindung nicht von allen Endgeräten selbst, sondern von einigen wenigen, möglicherweise sogar nur von einem Proxy-Agenten gesteuert wird, reicht die VPI/VCI-Nummerierung nicht mehr aus, da die virtuellen ATM-Kanäle der einzelnen Endgeräte nicht eindeutig identifizierbar sind. Eine bestimmte VPI/VCI-Nummer kann keinem bestimmten Endgerät zugeordnet werden. Deshalb müssen zur eindeutigen Identifizierbarkeit eines virtuellen ATM-Kanals neben seiner VPI/VCI-Nummer auch Angaben über das zugeordnete Endgerät übermittelt werden.

Das erfolgt gemäß einer anderen vorteilhaften Weiterbildung der vorliegenden Erfindung dadurch, daß die virtuellen ATM-Kanäle, die Signalisierungskanäle und die Kanäle zum Übertragen der Informationen zum Konfigurieren, Überwachen und Betrieb der Schnittstellen eine durch alle Schnittstellen der Endgeräte der Gruppe durchgängige Nummerierung aufweisen, die dem Proxy-Agenten und den ATM-Vermittlungsswitches bekannt ist. Die Nummerierung wird auch als Virtual-Path-Connection-Identifier (VPCI)-Nummerierung bezeichnet.

Bei einer Verbindungsanfrage zu einem der Enögeräte der Gruppe oder bei einer Verbindungsanfrage von einem der Endgeräte der Gruppe bestimmt der Proxy-Agent die VPCI-Nummer des ausgewählten virtuellen ATM-Kanals der ausgewählten Schnittstelle. Die VPCI-Nummer wird dann an den ATM-Vermittlungsswitch übermittelt, der seinerseits dann den entsprechenden virtuellen ATM-Kanal der Schnittstelle des entsprechenden Endgeräts aktiviert.

Eine weitere Aufgabe der vorliegenden Erfindung besteht darin, ein Verfahren der eingangs genannten Art dahingehend auszugestalten und weiterzubilden, daß die Flexibilität des Verfahren erhöht wird.

Zur Lösung dieser Aufgabe schlägt die Erfindung ausgehend von dem Verfahren der eingangs genannten Art ein Verfahren vor, das durch die nachfolgenden Schritte gekennzeichnet ist:
- mehrere Endgeräte werden zu einer Gruppe zusammengefaßt
- mindestens ein Endgerät der Gruppe wird als Proxy-Agent definiert,
- dem Proxy-Agenten wird eine ATM-Adresse zugewiesen,
- der Proxy-Agent wählt die Schnittstelle eines der Endgeräte der Gruppe aus, zu oder von dem eine Datenübertragungsverbindung aufgebaut werden soll, und
- der Proxy-Agent wählt den ATM-Kanal aus, über den die Daten ausgetauscht werden sollen.

Gemäß einer bevorzugten Ausführungsform der vorliegenden Erfindung wird vorgeschlagen, daß der Aufbau der Datenübertragungsverbindung zu oder von den Endgeräten der Gruppe von dem Proxy-Agenten gesteuert wird.

Gemäß einer vorteilhaften Weiterbildung der Erfindung wird vorgeschlagen, daß dem Proxy-Agenten bekannt ist, welche Endgeräte zu einer Gruppe zusammengefaßt sind. Dem ATM-Vermittlungsswitch wird vorzugsweise die ATM-Adresse des Proxy-Agenten mitgeteilt.

Vorteilhafterweise wird zwischen dem ATM-Vermittlungsswitch und dem Proxy-Agenten jeweils ein Signalisierungskanal und für jedes Endgerät der Gruppe ein Kanal zum Übertragen der Informationen zum Konfigurieren, Überwachen und Betrieb der Schnittstellen ausgebildet.

Gemäß einer bevorzugten Ausführungsform der vorliegenden Erfindung werden der Signalisierungskanal und die Kanäle zum Übertragen der Informationen zum Konfigurieren, Überwachen und Betrieb der Schnittstellen als permanente virtuelle Verbindungen ausgebildet.

Gemäß einer anderen bevorzugten Ausführungsform der Erfindung wird vorgeschlagen, daß der ATM-Kanal, über den die Daten ausgetauscht werden sollen, nach einem bestimmten Auswahlkriterium ausgewählt wird. Als Auswahlkriterium wird vorteilhafterweise
- auf eine gleichmäßige Auslastung der ATM-Kanäle,
- auf eine bevorzugte Behandlung bestimmter Verkehrsklassen (CBR- bzw. VBR-rt-Verkehrsklasse),
- auf eine optimale Ausnutzung der Bandbreite (Minimierung der Zerstückelung der verfügbaren Bandbreite), und/oder
- auf eine Zuverlässigkeit bzw. Sicherheit der Endgeräte geachtet. Bei bestimmten Anwendung können Endgeräte hoher Verfügbarkeit (Zuverlässigkeit) oder Sicherheit für Verbindungen bereitgestellt werden. Bei anderen Anwendungen können, u. U. zu reduzierten Kosten, auch Endgeräte mit einer geringeren Verfügbarkeit oder Sicherheit zur Verfügung gestellt werden.

Der Proxy-Agent und der ATM-Vermittlungsswitch sind über den Betriebszustand und die Systemresourcen aller Schnittstellen informiert. In erster Linie ist der Proxy-Agent für diese Aufgabe zuständig. Der ATM-Vermittlungsswitch muß sie aber redundant ausführen, wenn nicht vollständig, so doch in einem ausreichenden Umfang, um die Konsistenz, Integrität und Verfügbarkeit der Systemressourcen im Falle eines Fehlers oder Ausfalls des Proxy-Agenten gewährleisten zu können.

Ein bevorzugtes Ausführungsbeispiel der vorliegenden Erfindung wird nachfolgend anhand der Zeichnungen näher erläutert. Es zeigen:

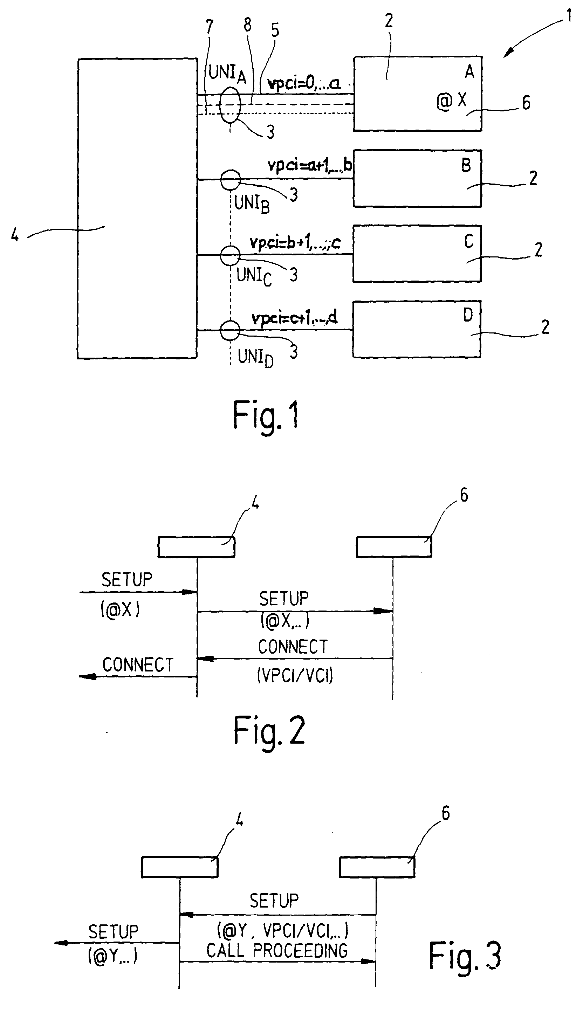

- Fig. 1: ein erfindungsgemäßes Netzwerk in schematischer Darstellung;
- Fig. 2: einen Signalverlauf zwischen einem ATM-Vermittlungsswitch und einem Proxy-Agenten bei dem Netzwerk aus Fig. 1; und
- Fig. 3: einen anderen Signalverlauf zwischen dem ATM-Vermittlungsswitch und dem Proxy-Agenten bei dem Netzwerk aus Fig. 1.

In Fig. 1 ist ein erfindungsgemäßes Netzwerk in seiner Gesamtheit mit dem Bezugszeichen 1 bezeichnet. Das Netzwerk 1 weist mehrere Endgeräte 2 (Endgerät A, B, C und D) auf, insbesondere Computer, die untereinander über Schnittstellen 3 für jedes Endgerät 2 und einen Asynchronous-Transfer-Mode (ATM) -Vermittlungsswitch 4 verbunden sind. Die Schnittstellen 3 sind als User-Network-Interface (UNI) ausgebildet. Auf mindestens einem der Endgeräte 2 sind Informationen zum Kantigurieren, Überwachen und Betrieb der Schnittstellen 3 abgelegt. Die Endgeräte 2 weisen ATM-Anschlüsse auf und tauschen untereinander über virtuelle ATM-Kanäle 5 Daten aus.

Die Endgeräte 2 sind zu einer Gruppe zusammengefaßt. In dem Netzwerk 1 können auch mehrere Gruppen von Endgeräten ausgebildet sein, obwohl in Fig. 1 nur eine solche Gruppe dargestellt ist. Ein Endgerät 2 (Endgerät A) der Gruppe ist als Proxy-Agent 6 definiert. Dem Proxy-Agenten 6 wird eine ATM-Adresse (@X) zugewiesen. Der Proxy-Agent 6 weist erste Mittel zur Auswahl der Schnittstelle 3 eines der Endgeräte 2 der Gruppe auf, zu oder von dem eine Datenübertragungsverbindung aufgebaut werden soll. Des weiteren weist der Proxy-Agent 6 zweite Mittel zur Auswahl des ATM-Kanals 5 auf, über den die Daten ausgetauscht werden sollen. Schließlich weist der Proxy-Agent 6 auch weitere Mittel zum Steuern des Aufbaus der Datenübertragungsverbindung zu oder von den Endgeräten 2 der Gruppe auf. Die ersten, zweiten und weiteren Mittel sind bspw. als eine Treiber-Software ausgebildet, die auf dem Proxy-Agenten 6 installiert ist.

Dem Proxy-Agenten 6 ist bekannt, welche Endgeräte 2 zu einer Gruppe zusammengefaßt sind. Dem ATM-Vermittlungsswitch 4 ist bekannt, welche Individual-Adresse (@X) dem Proxy-Agenten 6 zugewiesen worden ist. Zwischen dem ATM-Vermittlungsswitch 4 und dem Proxy-Agenten 6 ist ein Signalisierungskanal 7 und für jedes Endgerät 2 (Endgerät A, B, C, D) der Gruppe ein Kanal 8 zum Übertragen der Informationen zum Konfigurieren, Überwachen und Betrieb der Schnittstellen 3 ausgebildet. Die Kanäle 8 zum Übertragen von Informationen zum Konfigurieren, Überwachen und Betrieb der Schnittstellen 3 zwischen dem ATM-Vermittlungsswitch 4 und dem Proxy-Agenten 6 sind für das erfindungsgemäße Netzwerk 1 nicht unbedingt notwendig. Sie bieten sich aber an, da der Proxy-Agent 6, um über den Zustand der Schnittstellen 3, insbesondere über deren Verbindungsressourcen, genau im Bilde zu sein, einen Zugriff auf die Schnittstellen 3 über diese Kanäle 8 zum Übertragen der Informationen zum Konfigurieren, Überwachen und Betrieb der Schnittstellen 3 haben muß. Wohlgemerkt, der Zugriff des Proxy-Agenten 6 könnte auch auf in den Endgeräten 2 bereits vorhandenen, in der Regel proprietären Mitteln beruhen, wohingegen der Austausch zwischen dem Vermittlungsswitch 4 und dem Proxy-Agenten 6 in aller Regel auf Standardprotokollen, wie z. B. ILMI 4.0 von ATM Forum, basiert. Der Signalisierungskanal 7 und die Kanäle 8 zum Übertragen der Informationen zum Konfigurieren, Überwachen und Betrieb der Schnittstellen 3 sind als permanente virtuelle Verbindungen ausgebildet.

Die virtuellen ATM-Kanäle 5, der Signalisierungskanal 7 und die Kanäle 8 zum Übertragen der Informationen zum Konfigurieren, Überwachen und Betrieb der Schnittstellen 3 weisen eine durch alle Schnittstellen 3 durchgängige Nummerierung auf, die dem Proxy-Agenten 6 und dem ATM-Vermittlungsswitch 4 bekannt ist. Die Nummerierung wird als Virtual-Path-Connection-Identifier (VPCI)-Nummerierung bezeichnet und geht bei dem in Fig. 1 dargestellten Netzwerk 1 von 0 bis d (0, ..., a, a+1, ..., b, b+1, ..., c, c+1, ..., d).

Im folgenden wird der Signalisierungsablauf in dem Netzwerk 1 für einen auf vier ATM-Endgeräte 2 verteilten File-Transfer-Service beschrieben. Der File-Transfer-Service wurde unter einer gewöhnlichen ATM-Adresse (@X) in dem Netzwerk 1 bekanntgegeben. Zwischen dem ATM-Vermittlungsswitch 4 und dem Proxy-Agenten 6 (Endgerät A) ist eine Schnittstelle 3 (UNI_{A}) ausgebildet, die vollständig i.S.d. UNI-4.0- und ILMI-4.0-Spezifikation von ATM Forum ausgestattet ist. Demgegenüber sind die Endgeräte (2) B, C und D jeweils mit einer Schnittstelle (UNI_{B}, UNI_{C}, UNI_{D}) ausgerüstet, die nur eine physikalische Schicht (physical layer) und die ATM-Schicht (ATM-layer) enthält und von dem Proxy-Agent 6 gesteuert und überwacht wird. Jeder Teilnehmer, der eine Verbindung zu der ATM-Adresse @X aufbaut, kann den File-Transfer-Service nutzen (z. B. zum Herunterladen von Daten auf sein Endgerät oder zum Heraufladen von Daten auf den File-Transfer-Service).

Wenn nun ein Teilnehmer den File-Transfer-Service in Anspruch nehmen möchte (vgl. Fig. 2), ruft er die diesem Service zugeordnete ATM-Adresse @X an. Der ATM-Vermittlungsswitch 4 empfängt die zugehörige SETUP-Nachricht und erkennt anhand der Adresse @X, daß die Verbindung für das Endgerät A, den Proxy-Agenten 6, bestimmt ist. Der ATM-Vermittlungsswitch 4 überprüft die Zulässigkeit der Verbindung indem er die Bandbreiten- und Dienstgütenanforderungen aus der SETUP-Nachricht mit der augenblicklich verfügbaren Systemressourcen vergleicht. Sind ausreichend Systemressourcen vorhanden, sendet der ATM-Vermittlungsswitch 4 eine SETUP-Nachricht an die Schnittstelle UNI_{A} des Endgeräts A, anderenfalls wird die Verbindung mit der Nachricht RELEASE COMPLETE abgewiesen. Nach dem Empfang der SETUP-Nachricht prüft der Proxy-Agent 6 anhand der Bandbreiten- und Dienstgütenanforderungen aus dieser Nachricht, ob die Verbindung einer der Schnittstellen 3 der Gruppe der Endgeräte 2 zugetielt werden kann. Falls ja, bestimmt der Proxy-Agent 6 die Schnittstelle und die VPI/VCI-Nummer eines bestimmten ATM-Kanals 5, wandelt diese in eine äquivalente VPCI/VCI-Nummer um, aktiviert den zugehörigen virtuellen ATM-Kanal 5 und sendet die VPCI/VCI-Nummer in einer CALL PROCEEDING-Nachricht an den ATM-Vermittlungsswitch 4. Dieser aktiviert seinerseits den zugehörigen virtuellen ATM-Kanal 5, schaltet ihn mit dem entsprechenden ankommenden virtuellen ATM-Kanal 5 durch und setzt den Verbindungsaufbau in bekannter Weise fort.

Bei einer zu dem Teilnehmer des File-Transfer-Services abgehenden Verbindung (vgl. Fig. 3) überprüft der ATM-Vermittlungsswitch 4, ob die Bandbreiten- und Dienstgüteanforderungen aus der von dem Proxy-Agenten 6 empfangenen SETUP-Nachricht für die gewünschte Verbindung möglich sind. Falls diese Anforderungen möglich sind, nimmt er die ATM-Adresse @X und die VPCI/VCI-Nummer zur Kenntnis, um den ankommenden virtuellen ATM-Kanal 5 zu aktivieren, sendet eine CALL PROCEEDING-Nachricht an den Proxy-Agenten 6 zurück und baut die Verbindung zu dem Teilnehmer in bekannter Weise auf, indem er eine SETUP-Nachricht zu dem Endgerät des Teilnehmers aussendet.

## Patentansprüche

1. Netzwerk (1) von mehreren Endgeräten (2), insbesondere von Computern, die untereinander über eine Schnittstelle (3) für jedes Endgerät (2) und mindestens einen Asynchronous-Transfer-Mode (ATM)-Vermittlungsswitch (4) verbunden sind, wobei auf mindestens einem der Endgeräte (2) Informationen zum Konfigurieren, Überwachen und Betrieb der Schnittstellen (3) abgelegt sind und wobei die Endgeräte (2) ATM-Anschlüsse aufweisen und untereinander über virtuelle ATM-Kanäle (5) Daten austauschen, dadurch gekennzeichnet, daß mehrere Endgeräte (2) zu einer Gruppe zusammengefaßt sind, daß mindestens ein Endgerät (2) der Gruppe als Proxy-Agent (6) definiert ist, daß der Schnittstelle (3) des Proxy-Agenten (6) eine ATM-Adresse zugewiesen ist, daß der Proxy-Agent (6) erste Mittel zur Auswahl der Schnittstelle (3) eines der Endgeräte (2) der Gruppe aufweist, zu oder von dem eine Datenübertragungsverbindung aufgebaut werden soll, und daß der Proxy-Agent (6) zweite Mittel zur Auswahl des ATM-Kanals (5) aufweist, über den die Daten übertragen werden sollen.

2. Netzwerk (1) nach Anspruch 1, dadurch gekennzeichnet, daß der Proxy-Agent (6) weitere Mittel zum Steuern des Aufbaus der Datenübertragungsverbindung zu oder von den Endgeräten (2) der Gruppe aufweist.

3. Netzwerk (1) nach Anspruch 1 oder 2, dadurch gekennzeichnet, daß dem Proxy-Agenten (6) bekannt ist, welche Endgeräte (2) zu einer Gruppe zusammengefaßt sind.

4. Netzwerk (1) nach Anspruch 3, dadurch gekennzeichnet, daß dem ATM-Vermittlungsswitch (4) die ATM-Adresse des Proxy-Agenten (6) bekannt ist.

5. Netzwerk (1) nach einem der Ansprüche 1 bis 4, dadurch gekennzeichnet, daß zwischen dem ATM-Vermittlungsswitch (4) und dem Proxy-Agenten (6) ein Signalisierungskanal (7) und für jedes Endgerät (2) der Gruppe ein Kanal (8) zum Übertragen der Informationen zum Konfigurieren, Überwachen und Betrieb der Schnittstellen (3) der Endgeräte (2) der Gruppe ausgebildet ist.

6. Netzwerk (1) nach Anspruch 5, dadurch gekennzeichnet, daß der Signalisierungskanal (7) und die Kanäle (8) zum Übertragen der Informationen zum Konfigurieren, Überwachen und Betrieb der Schnittstellen (3) als permanente virtuelle Verbindungen ausgebildet sind.

7. Netzwerk (1) nach Anspruch 5 oder 6, dadurch gekennzeichnet, daß die virtuellen ATM-Kanäle (5), die Signalisierungskanäle (7) und die Kanäle (8) zum Übertragen der Informationen zum Konfigurieren, Überwachen und Betrieb der Schnittstellen (3) eine durch alle Schnittstellen (3) der Endgeräte (2) der Gruppe durchgängige Nummerierung aufweisen, die dem Proxy-Agenten (6) und den ATM-Vermittlungsswitches (4) bekannt ist.

8. Verfahren zum Betrieb eines Netzwerks (1) von mehreren Endgeräten (2), insbesondere von Computern, die untereinander über eine Schnittstelle (3) für jedes Endgerät (2) und mindestens einen Asynchronous-Transfer-Mode (ATM)-Vermittlungsswitch (4) verbunden sind, wobei auf mindestens einem der Endgeräte (2) Informationen zum Konfigurieren, Überwachen und Betrieb der Schnittstellen (3) abgelegt sind und wobei die Endgeräte (2) ATM-Anschlüsse aufweisen und untereinander über virtuelle ATM-Kanäle (5) Daten austauschen, gekennzeichnet durch die nachfolgenden Schritte:
- mehrere Endgeräte (2) werden zu einer Gruppe zusammengefaßt
- mindestens ein Endgerät (2) der Gruppe wird als Proxy-Agent (6) definiert,
- dem Proxy-Agenten (6) wird eine ATM-Adresse zugewiesen,
- der Proxy-Agent (6) wählt die Schnittstelle (3) eines der Endgeräte (2) der Gruppe aus, zu oder von dem eine Datenübertragungsverbindung aufgebaut werden soll, und
- der Proxy-Agent (6) wählt den ATM-Kanal (5) aus, über den die Daten ausgetauscht werden sollen.

9. Verfahren nach Anspüruch 1, dadurch gekennzeichnet, daß der Aufbau der Datenübertragungsverbindung zu oder von den Endgeräten (2) der Gruppe von dem Proxy-Agenten (6) gesteuert wird.

10. Verfahren nach Anspruch 8 oder 9, dadurch gekennzeichnet, daß dem Proxy-Agenten (6) mitgeteilt wird, welche Endgeräte (2) zu einer Gruppe zusammengefaßt werden.

11. Verfahren nach Anspruch 10, dadurch gekennzeichnet, daß dem ATM-Vermittlungsswitch (4) die ATM-Adresse des Proxy-Agenten (6) mitgeteilt wird.

12. Verfahren nach einem der Ansprüche 8 bis 11, dadurch gekennzeichnet, daß zwischen dem ATM-Vermittlungsswitch (4) und dem Proxy-Agenten (6) jeweils ein Signalisierungskanal (7) und für jedes Endgerät (2) der Gruppe ein Kanal (8) zum Übertragen der Informationen zum Konfigurieren, Überwachen und Betrieb der Schnittstellen (3) ausgebildet wird.

13. Verfahren nach Anspruch 12, dadurch gekennzeichnet, daß der Signalisierungskanal (7) und der Kanal (8) zum Übertragen der Informationen zum Konfigurieren, Überwachen und Betrieb der Schnittstellen (3) als permanente virtuelle Verbindungen ausgebildet werden.

14. Verfahren nach einem der Ansprüche 8 bis 13, dadurch gekennzeichnet, daß der ATM-Kanal (5), über den die Daten ausgetauscht werden sollen, nach einem bestimmten Auswahlkriterium ausgewählt wird.

15. Verfahren nach Anspruch 14, dadurch gekennzeichnet, daß als Auswahlkriterium
- auf eine gleichmäßige Auslastung der ATM-Kanäle (5),
- auf eine bevorzugte Behandlung bestimmter Verkehrsklassen,
- auf eine optimale Ausnutzung der Bandbreite, und/oder
- auf eine Zuverlässigkeit bzw. Sicherheit der Endgeräte (2) geachtet wird.
